# EUROPEAN PATENT SPECIFICATION

(11) **EP 2 553 027 B1**
(45) Date of publication and mention of the grant of the patent: **12.05.2021**
(21) Application number: 11714463.4
(22) Date of filing: 29.03.2011
(51) Int. Cl.: C09D 1/00, C09D 5/18, F01D 5/28, C04B 41/89, C04B 41/52, C04B 41/00, C23C 28/04

(54) **MULTILAYER CMAS-RESISTANT BARRIER COATING**
MEHRLAGIGE CMAS-BESTÄNDIGE SPERRSCHICHT
REVÊTEMENT BARRIÈRE MULTICOUCHE RÉSISTANT AU CMAS

(30) Priority: 29.03.2010 US 318567 P; 17.02.2011 US 443977 P
(43) Date of publication of application: 06.02.2013
(73) Proprietor: Rolls-Royce Corporation, Indianapolis, IN 46241 (US)
(72) Inventor: LEE, Kang, N., Zionsville, IN 46077 (US)
(74) Representative: HGF
(86) International application number: PCT/US2011/030298
(87) International publication number: WO 2011/123432

(56) References cited:
- EP-A1- 2 189 504
- WO-A1-2009/091724
- WO-A2-2009/091721
- US-A- 5 876 860
- US-A1- 2006 024 528
- US-A1- 2006 280 955

## Description

### TECHNICAL FIELD

The present disclosure generally relates to thermal or environmental barrier coatings for high-temperature mechanical systems, such as gas turbine engines.

### BACKGROUND

Components of high-temperature mechanical systems, such as, for example, gas-turbine engines, must operate in severe environments. For example, the high-pressure turbine blades and vanes exposed to hot gases in commercial aeronautical engines typically experience metal surface temperatures of about 1000°C, with short-term peaks as high as 1100 °C. Typical components of high-temperature mechanical systems include a Ni or Co-based superalloy substrate. In an attempt to reduce the temperatures experienced by the substrate, the substrate can be coated with a thermal barrier coating (TBC). The thermal barrier coating may include a thermally insulative ceramic topcoat and is bonded to the substrate by an underlying metallic bond coat. The TBC, usually applied either by air plasma spraying or electron beam physical vapor deposition, is most often a layer of yttria-stabilized zirconia (YSZ) with a thickness of about 100-500 µm. The properties of YSZ include low thermal conductivity, high oxygen permeability, and a relatively high coefficient of thermal expansion. The YSZ TBC is also typically made "strain tolerant" and the thermal conductivity further lowered by depositing a structure that contains numerous pores and/or pathways.

Economic and environmental concerns, i.e., the desire for improved efficiency and reduced emissions, continue to drive the development of advanced gas turbine engines with higher inlet temperatures. Some components of high-temperature mechanical systems include a ceramic or ceramic matrix composite (CMC)-based substrate, which may allow an increased operating temperature compared to a component with a superalloy substrate. The CMC-based substrate can be coated with an environmental barrier coating (EBC) to reduce exposure of a surface of the substrate to environmental species, such as water vapor or oxygen. The EBC also may provide some thermal insulation to the CMC-based substrate. The EBC may include a ceramic topcoat, and may be bonded to the substrate by an underlying metallic or ceramic bond coat. As the turbine inlet temperature continues to increase, there is a demand for a TBC and/or EBC with lower thermal conductivity and higher temperature stability to minimize the increase in, maintain, or even lower the temperatures experienced by the substrate

US 2006/280955 discloses a turbine blade comprising a multi-layer coating comprising in this order a) a bond layer (50) applied to a substrate (30), b) a first CMAS resistant layer (58) selected from mullite yttrium silicate combinations, c) a barrier layer (66) and d) a corrosion resistant layer (74) that protects from environmental attack by corrosive agents such as CMAS selected from aluminates of rare earths.

### SUMMARY

In general, the disclosure is directed to a coating having CMAS-resistance. CMAS is a calcia-magnesia-alumina-silicate deposit resulting from the ingestion of siliceous minerals (dust, sand, volcanic ashes, runway debris) with the intake of air in gas turbine engines.

The present invention is directed to an article comprising: a substrate; a first calcia-magnesia-alumina-silicate-resistant (CMAS-resistant) layer comprising a mixture of a rare earth oxide, alumina and silica, wherein the CMAS-resistant layer is formed over the substrate; a barrier coating layer comprising a thermal barrier coating composition or an environmental barrier coating composition, wherein the barrier coating layer is formed on the first CMAS-resistant layer; and a second CMAS-resistant layer comprising a mixture of a second rare earth oxide and alumina formed on the barrier coating layer. Additionally, the article may include a second barrier coating layer comprising a thermal barrier coating composition or an environmental barrier coating composition, and the second barrier coating layer is formed on the CMAS-resistant layer.

In another aspect, the disclosure is directed to an article including a plurality of barrier coating layers comprising at least one of a thermal barrier coating composition or an environmental barrier coating composition and a plurality of CMAS-resistant layers comprising a rare earth oxide and alumina. According to this aspect of the disclosure, respective ones of the plurality of barrier coating layers alternate with respective ones of the plurality of CMAS-resistant layers.

The present invention is further directed to a method comprising: forming, over a substrate, a first calcia-magnesia-alumina-silicate-resistant (CMAS-resistant) layer comprising a rare earth oxide, alumina and silica; forming, on the first CMAS-resistant layer, a barrier coating layer comprising a thermal barrier coating composition or an environmental barrier coating composition; and forming, on the barrier coating layer, a second CMAS-resistant layer comprising a second rare earth oxide and alumina. In an additional aspect, the disclosure is directed to a method including forming, over a substrate, a first barrier coating layer including a thermal barrier coating composition or an environmental barrier coating composition. According to this aspect of the disclosure, the method further includes forming, on the first barrier coating layer, a CMAS-resistant layer including a rare earth oxide and alumina. The method additionally includes forming, on the CMAS-resistant layer, a second barrier coating layer comprising a thermal barrier coating composition or an environmental barrier coating composition.

In another aspect, the disclosure is directed to a method including forming, over a substrate, a plurality of barrier coating layers. According to this aspect of the disclosure, the plurality of barrier coating layers comprise at least one of a thermal barrier coating composition or an environmental barrier coating composition. The method further includes forming, over the substrate, a plurality of CMAS-resistant layers including a rare earth oxide and alumina. In this aspect of the disclosure, respective ones of the plurality of barrier coating layers alternate with respective ones of the CMAS-resistant layers.

### BRIEF DESCRIPTION OF DRAWINGS

FIG. 1 is a cross-sectional diagram of an example of a substrate coated with a bond coat, a first barrier coating, a CMAS-resistant layer, and a second barrier coating.
FIG. 2 is a cross-sectional diagram of an example of a substrate coated with a bond coat, a first barrier coating, a first CMAS-resistant layer, a second barrier coating, and a second CMAS-resistant layer.
FIG. 3 is a cross-sectional diagram of an example of a substrate coated with a bond coat, a plurality of barrier coating layers, and a plurality of CMAS-resistant layers.
FIG. 4 is a cross-sectional diagram of an example of a substrate coated with a bond coat, a CMAS-resistant layer, and a second barrier coating.
FIG. 5 is a cross-sectional photograph of an example of an article not including a CMAS-resistant layer after exposure to CMAS.
FIG. 6 is a cross-sectional photograph of an example of an article which includes a CMAS-resistant layer after exposure to CMAS.
FIG. 7 is a cross-sectional photograph of an example of an article which includes a CMAS-resistant layer and an EBC formed on the CMAS-resistant layer after exposure to CMAS.

### DETAILED DESCRIPTION

In general, the disclosure is directed to coatings that possess CMAS degradation resistance, and articles coated with such coatings. The coatings include multiple layers, including, two CMAS-resistant layers and a barrier coating layer formed between the CMAS-resistant layers. According to the invention the coatings comprise a first calcia-magnesia-alumina-silicate-resistant (CMAS-resistant) layer comprising a mixture of a rare earth oxide, alumina and silica, wherein the CMAS-resistant layer is formed over a substrate; a barrier coating layer comprising a thermal barrier coating composition or an environmental barrier coating composition, wherein the barrier coating layer is formed on the first CMAS-resistant layer; and a second CMAS-resistant layer comprising a mixture of a second rare earth oxide and alumina formed on the barrier coating layer. The multilayer structure may contribute to thermal insulation provided by the coating to a substrate on which the coating is deposited. For example, interfaces between two different materials (e.g., a CMAS-resistant layer and a barrier coating layer) may reduce a thermal conductivity of a coating compared to a coating including only a single layer.

Increased operating efficiency (e.g., fuel efficiency) is continually sought after to reduce operating costs of gas turbine engines. Operating the gas turbine engines at higher temperatures is one technique of improving operating efficiency of the engine. As turbine inlet temperatures continue to increase, new barrier coatings, such as thermal barrier coatings (TBCs) or environmental barrier coatings (EBCs), are required that are able to withstand the high temperature to which the components of the gas turbine engine are exposed. As described briefly above, TBCs are typically deposited as a porous or columnar structure, which increases the stress tolerance and reduces the thermal conductivity of the TBC compared to a non-porous TBC. However, this porous or columnar TBC structure is susceptible to damage.

Higher turbine inlet temperatures may lead to damage of the TBC when a CMAS deposit forms on the TBC from the ingestion of siliceous minerals (dust, sand, volcanic ashes, runway debris) with the intake of air in gas turbine engines. Typical CMAS deposits have a melting temperature of about 1200°C to about 1250°C (about 2200°F to about 2300°F). Advanced gas turbine engines run at TBC surface temperatures above the CMAS melting temperature, so the CMAS may be molten on the surface of the TBC, which allows the CMAS to infiltrate the pores or cracks of the porous or columnar TBC. When the component coated with the TBC is cooled below the CMAS melting temperature, the CMAS solidifies, which exerts a strain on the TBC and may reduce the useful life of the TBC. The filling of the pores or cracks of the TBC with molten CMAS may also increase the thermal conductivity of the TBC, which is detrimental to the TBC performance and may cause the substrate of the component to be exposed to increased temperatures.

Additionally, in embodiments in which a TBC includes yttria-stabilized zirconia (YSZ), the molten CMAS may dissolve the TBC along grain boundaries of the YSZ, and, depending on the melt chemistry, yttria may be dissolved in CMAS, leading to precipitation of zirconia with lower yttria content. This zirconia with lower yttira content may decrease the effectiveness of the TBC compared to a TBC including zirconia and a higher yttria content.

Similar problems may occur in an article coated with an EBC. In some embodiments, at least a portion of an EBC (e.g., a sub-layer of the EBC) may be deposited on a substrate as a columnar or porous layer, and the cracks or pores may permit ingress of molten CMAS at sufficiently high operating temperatures. As described above, when CMAS cools below its melting temperature and hardens, this may exert a strain on the EBC and result in breaking of the EBC or spallation of the EBC from the substrate. Spallation of the EBC from the substrate exposes the substrate to attack by water vapor or other environmental species, which may result in recession or corrosion of the substrate.

In some examples, molten CMAS may penetrate through an EBC or a TBC and may contact a bond coat or a substrate of the article. The CMAS may chemically react with the bond coat and/or substrate and may degrade the bond coat and/or substrate.

In accordance with the disclosure, a coating includes a structure that protects at least one of the substrate, bond coat, or barrier coating (i.e., TBC and/or EBC) of an article from CMAS. In general, the coating according to the invention includes at least two CMAS-resistant layers and at least one barrier coating layer. The barrier coating layer may be a TBC or an EBC. The CMAS-resistant layer provides to the coating increased resistance to the detrimental effects of CMAS. For example, the CMAS-resistant layers substantially prevent molten CMAS from infiltrating pores or cracks of the barrier coating layer and/or may substantially prevent molten CMAS from contacting a bond coat or substrate of the article. In some embodiments, a CMAS-resistant layer reacts with constituents of CMAS to form a solid or highly viscous reaction product, which does not infiltrate the pores or cracks of the TBC or EBC as quickly as molten CMAS. Additionally or alternatively, the CMAS-resistant layer may be formed as a substantially nonporous layer which physically prevents CMAS from infiltrating pores or cracks of the TBC or EBC.

In some embodiments, the barrier coating layer comprises a second barrier coating layer, wherein the article further comprises a first barrier coating layer formed over the substrate, wherein the first barrier coating layer comprises a thermal barrier coating composition or an environmental barrier coating composition, and wherein the first CMAS-resistant layer is formed on the first barrier coating layer. In these embodiments, the second barrier coating layer may act to reduce the rate at which molten CMAS reacts with the CMAS-resistant layer by acting as a migration barrier to the molten CMAS, which reduces the rate at which CMAS encounters the CMAS-resistant layer. This may improve protection provided by the CMAS-resistant layer to the first barrier coating layer.

In some embodiments, the multilayer coating has a lower thermal conductivity compared to a single-layer coating, because the interfaces between the first barrier coating layer and the CMAS-resistant layer and between the CMAS-resistant layer and the second barrier coating layer provide phonon scattering points. Accordingly in some embodiments, the CMAS-resistant layer provides protection from CMAS and, additionally, reduces thermal conductivity of the coating compared to a coating which does not include a CMAS-resistant layer.

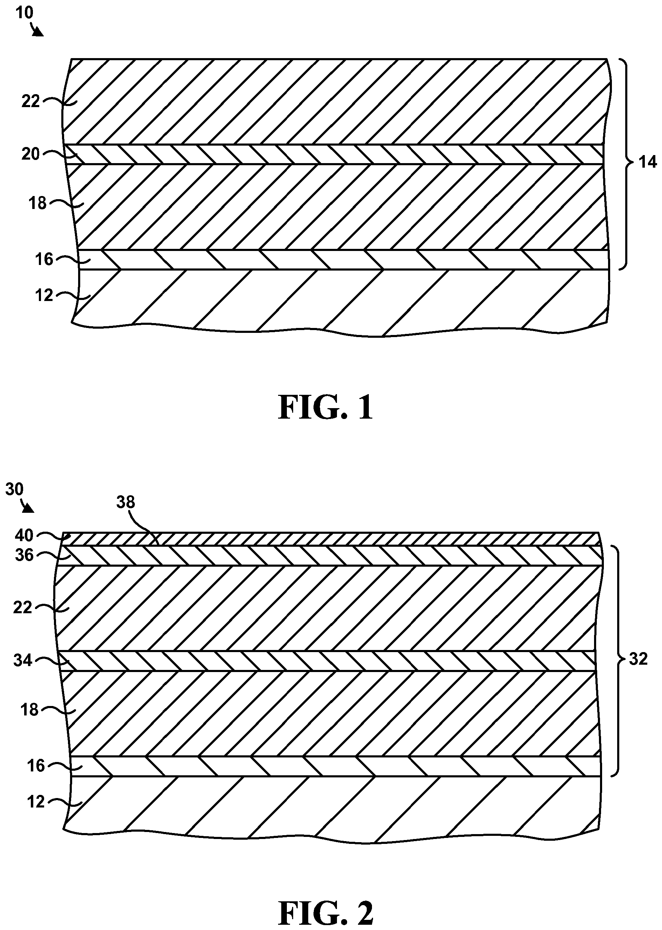

In accordance with some embodiments of the disclosure, FIG 1 shows a cross-sectional view of an example of an article 10 used in a high-temperature mechanical system. Article 10 includes a coating 14 applied to a substrate 12. Coating 14 includes a bond coat 16 formed on substrate 12, a first barrier coating layer 18 formed on bond coat 16, a CMAS-resistant layer 20 formed on first barrier coating layer 18, and a second barrier coating layer 22 formed on CMAS-resistant layer 20.

Substrate 12 is a component of a high temperature mechanical system, such as, for example, a gas turbine engine. In some embodiments, substrate 12 includes a superalloy, while in other embodiments, substrate 12 includes a ceramic or ceramic matrix composite (CMC). When substrate 12 includes a superalloy, substrate 12 may include an alloy based on Ni, Co, Ni/Fe. When substrate 12 includes a superalloy, substrate 12 may include other additive elements to alter its mechanical properties, such as toughness, hardness, temperature stability, corrosion resistance, oxidation resistance, as is well known in the art. Any useful superalloy may be utilized in substrate 12, including, for example, those available from Martin-Marietta Corp., Bethesda, MD, under the trade designation MAR-M247; those available from Cannon-Muskegon Corp., Muskegon, MI, under the trade designations CMSX-4 and CMSX-10.

In other embodiments, substrate 12 includes a ceramic or CMC. In embodiments in which substrate 12 includes a ceramic, the ceramic may be substantially homogeneous. In some embodiments, a substrate 12 that includes a ceramic includes, for example, a silicon-containing ceramic, such as silica (SiO₂), silicon carbide (SiC) or silicon nitride (Si₃N₄), alumina (Al₂O₃), aluminosilicate. In other embodiments, substrate 12 includes a metal alloy that includes silicon, such as a molybdenum-silicon alloy (e.g., MoSi₂) or a niobium-silicon alloy (e.g., NbSi₂).

In embodiments in which substrate 12 includes a CMC, substrate 12 includes a matrix material and a reinforcement material. The matrix material includes a ceramic material, such as, for example, silicon carbide, silicon nitride, alumina, aluminosilicate, silica. The CMC further includes a continuous or discontinuous reinforcement material. For example, the reinforcement material may include discontinuous whiskers, platelets, or particulates. As other examples, the reinforcement material may include a continuous monofilament or multifilament weave.

The composition, shape, size of the reinforcement material may be selected to provide the desired properties to the substrate 12 including the CMC. In some embodiments, the reinforcement material is chosen to increase the toughness of a brittle matrix material. The reinforcement material may additionally or alternatively be chosen to modify a thermal conductivity, electrical conductivity, thermal expansion coefficient, hardness of a substrate 12 including a CMC.

In some embodiments, the composition of the reinforcement material is the same as the composition of the matrix material. For example, a matrix material comprising silicon carbide may surround a reinforcement material comprising silicon carbide whiskers. In other embodiments, the reinforcement material includes a different composition than the composition of the matrix material, such as aluminosilicate fibers in an alumina matrix. One composition of a substrate 12 that comprises a CMC includes a reinforcement material comprising silicon carbide continuous fibers embedded in a matrix material comprising silicon carbide.

Some example CMCs used for substrate 12 include composites of SiC or Si₃N₄ and silicon oxynitride or silicon aluminum oxynitride, and oxide-oxide ceramics, such as a matrix material of alumina or aluminosilicate and a reinforcement material comprising NEXTEL™ Ceramic Oxide Fiber 720 (available from 3M Co., St. Paul, MN).

As shown in FIG. 1, article 10 may include a bond coat 16 formed on substrate 12. Although not illustrated in FIG. 1, in other embodiments, article 10 may not include a bond coat 16. Bond coat 16 may improve adhesion between substrate 12 and the layer overlying bond coat 16 (e.g., first barrier coating layer 18 in FIG. 1). Bond coat 16 may include any useful material that improves adhesion between substrate 12 and an overlying layer.

For example, when substrate 12 is a superalloy, bond coat 16 may include an alloy, such as an MCrAlY alloy (where M is Ni, Co, or NiCo), a β-NiAl nickel aluminide alloy (either unmodified or modified by Pt, Cr, Hf, Zr, Y, Si, and combinations thereof), a γ-Ni + γ'-Ni₃Al nickel aluminide alloy (either unmodified or modified by Pt, Cr, Hf, Zr, Y, Si, and combination thereof).

In embodiments where substrate 12 is a ceramic or CMC, bond coat 16 may include a ceramic or another material that is compatible with the substrate 12. For example, bond coat 16 may include mullite (aluminum silicate, Al₆Si₂O₁₃), silicon, silica, a silicide. Bond coat 16 may further include other elements, such as silicates of rare earth elements (i.e., a rare earth silicate) including Lu (lutetium), Yb (ytterbium), Tm (thulium), Er (erbium), Ho (holmium), Dy (dysprosium), Tb (terbium), Gd (gadolinium), Eu (europium), Sm (samarium), Pm (promethium), Nd (neodymium), Pr (praseodymium), Ce (cerium), La (lanthanum), Y (yttrium), or Sc (scandium). Some preferred compositions of a bond coat 16 formed on a substrate 12 formed of a ceramic or CMC include silicon, mullite, an yttrium silicate or an ytterbium silicate.

The composition of bond coat 16 may be selected based on a number of considerations, including the chemical composition and phase constitution of substrate 12 and the layer overlying bond coat 16 (in FIG. 1, first barrier coating layer 18). For example, when substrate 12 includes a superalloy with a γ-Ni + γ'-Ni₃Al phase constitution, bond coat 16 preferably includes a γ-Ni + γ'-Ni₃Al phase constitution to better match the coefficient of thermal expansion of the superalloy substrate 12. This may increase the mechanical stability (adhesion) of the bond coat 16 to the substrate 12. Alternatively, when substrate 12 includes a CMC, bond coat 16 may be silicon or a ceramic, for example, mullite.

In some embodiments, a bond coat 16 that includes a single layer does not fulfill all the functions desired of bond coat 16. Thus, in some cases, bond coat 16 includes multiple layers. For example, in some embodiments where substrate 12 is a CMC comprising silicon carbide, bond coat 16 includes a layer of silicon formed on substrate 12 followed by a layer of mullite (aluminum silicate, Al₆Si₂O₁₃), a rare earth silicate, or a mullite/rare earth silicate dual layer formed on the layer of silicon. A bond coat 16 that includes multiple layers may be desirable when substrate 12 includes a CMC to accomplish the multiple desired functions of bond coat 16, such as, for example, adhesion of substrate 12 to first barrier coating layer 18, chemical compatibility of bond coat 16 with each of substrate 12 and first barrier coating layer 18, a desirable CTE match between adjacent layers.

In other embodiments, article 10 does not include bond coat 16. For example, first barrier coating layer 18 may be formed directly on substrate 12. Article 10 may not include bond coat 16 when first barrier coating layer 18 and substrate 12 are sufficiently chemically and/or mechanically compatible. For example, in embodiments where first barrier coating layer 18 and substrate 12 adhere sufficiently strongly to each other, article 10 may not include bond coat 16. Additionally, in embodiments where the coefficients of thermal expansion of substrate 12 and first barrier coating layer 18 are sufficiently similar, article 10 may not include bond coat 16. In this way, first barrier coating layer 18 may be formed on bond coat 16 or may be formed on substrate 12. As used herein, the term "formed over" encompasses embodiments in which a first layer is formed directly on a second layer and embodiments in which the first layer is formed over the second layer, with one or more intermediate layers between the first and second layer. For example, the term "first barrier coating layer 18 is formed over substrate 12" encompasses the following embodiments: first barrier coating layer 18 is formed directly on substrate 12; first barrier coating layer 18 is formed on bond coat 16, which is formed on substrate 12; and first barrier coating layer 18 is formed on another intermediate layer between substrate 12 and first barrier coating layer 18 (in addition to or instead of bond coat 16).

First barrier coating layer 18 is selected to provide a desired type of protection to substrate 12. For example, when substrate 12 includes a superalloy, first barrier coating layer 18 may include a TBC to provide temperature resistance (i.e., thermal insulation) to substrate 12, so the temperature experienced by substrate 12 is lower than when substrate 12 is not coated with first barrier coating layer 18. In other examples, when substrate 12 includes a ceramic or CMC, first barrier coating layer 18 may include an EBC or an EBC/TBC bilayer or multilayer coating to provide resistance to oxidation, water vapor attack, in addition to or as an alternative to temperature resistance.

In embodiments in which first barrier coating layer 18 includes a TBC, layer 18 includes a thermally insulative material. Common TBCs include ceramic layers comprising zirconia or hafnia. The zirconia or hafnia TBC optionally may include one or more other elements or compounds to modify a desired characteristic of the TBC, such as, for example, phase stability, thermal conductivity. Exemplary additive elements or compounds include rare earth oxides (oxides of Lu, Yb, Tm, Er, Ho, Dy, Tb, Gd, Eu, Sm, Pm, Nd, Pr, Ce, La, Y, or Sc). Particular examples of materials from which a TBC may be formed include zirconia stabilized with between 7 weight percent (wt. %) and 8 wt. % yttria; zirconia stabilized with ytterbia, samaria, and at least one of lutetia, scandia, ceria, gadolinia, neodymia, or europia; or hafnia stabilized with ytterbia, samaria, and at least one of lutetia, scandia, ceria, gadolinia, neodymia, or europia. In some embodiments, first barrier coating layer 18 may include zirconia and/or hafnia in combination with additive elements or compounds such that at least some of the stabilized zirconia or hafnia forms a metastable tetragonal-prime crystalline phase, a cubic crystalline phase, or a compound phase (RE₂Zr₂O₇ or RE₂Hf₂O₇, where RE is a rare earth element).

In some embodiments, first barrier coating layer 18 includes hafnia and/or zirconia, a primary dopant, a first co-dopant, and a second co-dopant. The primary dopant is preferably present in a greater amount than either the first or second co-dopants, and may be present in an amount less than, equal to, or greater than the total amount of the first and second co-dopants. The primary dopant includes ytterbia, the first co-dopant includes samaria, and the second co-dopant includes at least one of lutetia, scandia, ceria, gadolinia, neodymia, or europia.

In some embodiments, first barrier coating layer 18 includes between about 2 mol. % and about 40 mol. % of the primary dopant. In other embodiments, first barrier coating layer 18 includes between approximately 2 mol. % and approximately 20 mol. % of the primary dopant or between approximately 2 mol. % and approximately 10 mol. % of the primary dopant.

In some embodiments, first barrier coating layer 18 includes between about 0.1 mol. % and about 20 mol. % of the first co-dopant. In other first barrier coating layer 18 includes between about 0.5 mol. % and about 10 mol. % of the first co-dopant or between about 0.5 mol. % and about 5 mol. % of the first co-dopant.

In some embodiments, first barrier coating layer 18 includes between about 0.1 mol. % and about 20 mol. % of the second co-dopant. In other first barrier coating layer 18 includes between about 0.5 mol. % and about 10 mol. % of the second co-dopant or between about 0.5 mol. % and about 5 mol. % of the second co-dopant.

In some embodiments, the composition of first barrier coating layer 18 provides a desired phase constitution. For a first barrier coating layer 18 including zirconia and or hafnia, a primary dopant, a first co-dopant, and a second co-dopant, accessible phase constitutions include metastable tetragonal-prime, cubic, and compound (RE₂Zr₂O₇ and RE₂Hf₂O₇, where RE is a rare earth element). To achieve a RE₂O₃-ZrO₂ (and/or HfO₂) compound phase constitution, first barrier coating layer 18 includes between about 20 mol. % and about 40 mol. % primary dopant, between about 10 mol. % and about 20 mol. % first co-dopant, between about 10 mol. % and about 20 mol. % second co-dopant, and the balance base oxide (hafnia and/or zirconia) and any impurities present. To achieve a cubic phase constitution, the first barrier coating layer 18 includes between about 5 mol. % and about 20 mol. % primary dopant, between about 2 mol. % and about 10 mol. % first co-dopant, between about 2 mol. % and about 10 mol. % second co-dopant, and a balance base oxide (zirconia and/or hafnia) and any impurities present. In some embodiments, to achieve a metastable tetragonal phase constitution, first barrier coating layer 18 includes between about 2 mol. % and about 5 mol. % primary dopant, between about 0.5 mol. % and about 3 mol. % first co-dopant, between about 0.5 mol. % and about 3 mol. % second co-dopant, and a balance base oxide and any impurities present.

When first barrier coating layer 18 includes a TBC, layer 18 may be formed as a porous layer or a columnar layer.

In some embodiments, first barrier coating layer 18 includes an EBC. An EBC is layer which reduces or prevents attack of the substrate 12 by chemical species present in the environment in which article 10 is utilized, e.g., in the intake gas or exhaust gas of a gas turbine engine. For example, the EBC may include a material that is resistant to oxidation or water vapor attack. Exemplary EBC materials include mullite; glass ceramics such as barium strontium aluminosilicate (BaO-SrO-Al₂O₃-2SiO₂; BSAS), calcium aluminosilicate (CaAl₂Si₂O₈; CAS), cordierite (magnesium aluminosilicate), and lithium aluminosilicate; and rare earth silicates (silicates of Lu, Yb, Tm, Er, Ho, Dy, Tb, Gd, Eu, Sm, Pm, Nd, Pr, Ce, La, Y, or Sc). The rare earth silicate may be a rare earth mono-silicate (RE₂SiO₅, where RE stands for "rare earth") or a rare earth di-silicate (RE₂Si₂O₇, where RE stands for "rare earth"). In some embodiments, a first barrier coating layer 18 that includes an EBC is deposited as a substantially non-porous layer, while in other embodiments, first barrier coating layer 18 is deposited as a layer that includes a plurality of cracks.

Regardless of the composition of first barrier coating layer 18 or whether layer 18 includes a TBC or an EBC, layer 18 may be deposited by any suitable coating fabrication technique, including, for example, plasma spraying, physical vapor deposition (PVD), chemical vapor deposition (CVD), or a slurry process. In some embodiments, first barrier coating layer 18 may be deposited using directed vapor deposition (DVD), a type of electron beam physical vapor deposition (EB-PVD).

Regardless of whether first barrier coating layer 18 includes an EBC or a TBC, a CMAS-resistant layer 20 is formed over first barrier coating layer 18. CMAS-resistant layer 20 protects first barrier coating layer 18 from attack by molten CMAS.

CMAS-resistant layer 20 includes an element or compound that reacts with CMAS to form a solid or a highly-viscous reaction product (i.e., a reaction product that is a solid or highly viscous at the temperatures experienced by article 10). In some embodiments, CMAS-resistant layer 20 includes alumina and at least one rare earth oxide, such as, for example, an oxide of at least one of Sc, Y, La, Ce, Pr, Nd, Pm, Sm, Eu, Gd, Tb, Dy, Ho, Er, Tm, Yb, Lu, and combinations thereof. The combination of alumina and at least one rare earth oxide may allow tailoring of one or more properties of CMAS-resistant layer 20, such as, for example, the chemical reactivity of CMAS-resistant layer 20 with CMAS, the viscosity of the reaction products, the coefficient of thermal expansion (CTE) of CMAS-resistant layer 20, the chemical compatibility of CMAS-resistant layer 20 with first barrier coating layer 18 and second barrier coating layer 22.

In some embodiments, CMAS-resistant layer 20 is essentially free of zirconia and hafnia. That is, in these embodiments, CMAS-resistant layer 20 includes at most trace amounts of zirconia and hafnia, such as, for example, the amounts present in commercially-available rare earth oxides.

In some embodiments, CMAS-resistant layer 20 includes silica in addition to the alumina and at least one rare earth oxide. Silica can be added to CMAS-resistant layer 20 to allow further manipulation of the properties of CMAS-resistant layer 20, such as, for example, the chemical reactivity, viscosity of the reaction products, the CTE, the chemical compatibility of CMAS-resistant layer 20 with first barrier coating layer 18 and second barrier coating layer 22.

Further, in some embodiments, CMAS-resistant layer 20 optionally includes other additive components, such as, for example, TiO₂, Ta₂O₅, HfSiO₄, alkali oxides, alkali earth oxides, or mixtures thereof. The additive components may be added to CMAS-resistant layer 20 to modify one or more desired properties of CMAS-resistant layer 20. For example, the additive components may increase or decrease the reaction rate of CMAS-resistant layer 20 with CMAS, may modify the viscosity of the reaction product from the reaction of CMAS and CMAS-resistant layer 20, may increase adhesion of the CMAS-resistant layer 20 to the first barrier coating layer 18 and/or second barrier coating layer 22, may increase or decrease the chemical stability of CMAS-resistant layer 20.

CMAS-resistant layer 20 may include up to about 99 mol. % of the at least one rare earth oxide, ± 1 mol. %, and up to about 90 mol. % of alumina, with a total of 100 mol. %. In some embodiments, CMAS-resistant layer 20 may also include up to about 90 mol. % of silica. In some embodiments, CMAS-resistant layer 20 may additionally include up to about 50 mol. % of at least one of TiO₂, Ta₂O₅, HfSiO₄, an alkali oxide, or an alkali earth oxide.

In some embodiments, CMAS-resistant layer 20 includes between about 20 mol. % and about 80 mol. % of at least one rare earth oxide, between about 10 mol. % and about 80 mol. % alumina, and, optionally, between about 1 mol. % to about 80 mol. % of silica, in some embodiments, CMAS-resistant layer 20 may additionally include between about 0.1 mol. % and about 30 mol. % of at least one of TiO₂, Ta₂O₅, HfSiO₄, an alkali oxide, or an alkali earth oxide.

As described above, CMAS-resistant layer 20 reacts with CMAS that reaches layer 20 to form a solid or highly viscous reaction product. The reaction product may have a melting temperature significantly higher than CMAS (e.g., higher than about 1200-1250°C). A solid or highly viscous reaction product is desired because the CMAS-resistant layer 20 is consumed as it reacts with CMAS. If, for example, the reaction product of CMAS-resistant layer 20 and CMAS was a relatively low viscosity liquid, the low viscosity liquid would infiltrate the pores or cracks of first barrier coating layer 18 once the CMAS-resistant layer 20 is consumed by the reaction, which is the very occurrence the CMAS-resistant layer 20 is designed to prevent.

If the reaction product is a solid or highly viscous, however, a reaction layer will form on the surface of CMAS-resistant layer 20, which will lower the reaction rate of the CMAS with CMAS-resistant layer 20. That is, once a solid or highly viscous reaction layer forms on the surface of CMAS-resistant layer 20, the reaction between CMAS-resistant layer 20 and CMAS will slow, because any further reaction will require the diffusion of CMAS through the reaction layer to encounter the CMAS-resistant layer 20, or diffusion of a component of CMAS-resistant layer 20 through the reaction layer to encounter the CMAS. In either case, the diffusion of either CMAS or the component of CMAS-resistant layer 20 is expected to be the limiting step in the reaction once a solid or highly viscous reaction layer is formed on the surface of CMAS-resistant layer 20, because diffusion will be the slowest process.

Additionally, second barrier coating layer 22 may reduce a rate at which CMAS and CMAS-resistant layer 20 react by reducing the rate at which CMAS comes into contact with CMAS-resistant layer 20. Similar to a solid or highly viscous reaction layer formed on CMAS-resistant layer 20, second barrier coating layer 22 may function as a layer through which CMAS must pass in order to come into contact with CMAS-resistant layer 20. This reduction in effective reaction rate may prolong the life of CMAS-resistant layer 20 and increase the protection afforded by CMAS-resistant layer 20 to first barrier coating layer 18 compared to an article 10 which does not include a second barrier coating layer 22. Accordingly, the combination of the presence of second barrier coating layer 22 and the formation of a solid or highly viscous reaction product from the reaction of CMAS-resistant layer 20 and CMAS may substantially prevent infiltration of molten CMAS in pores or cracks of first barrier coating layer 18.

The thickness of CMAS-resistant layer 20 may vary widely depending on the conditions under which article 10 is to be used. For example, if CMAS deposits are expected to be extensive, CMAS-resistant layer 20 may be thicker than if CMAS deposits are expected to be limited. The thickness of CMAS-resistant layer 20, depending on the intended application, may range from about 2.5µm (0.1 mils (1 mil = 0.001 inch)) to about 1.5mm, ± 2.5µm (60 mils, ± 0.1 mil). In some embodiments, the thickness of CMAS-resistant layer 20 may range from about 2.5µm to about 760µm (about 0.1 mils to about 30 mils). In other embodiments, the thickness of CMAS-resistant layer 15 may range from about 13µm to about 380µm (about 0.5 mils to about 15 mils).

In some embodiments, it may be preferred that the coefficient of thermal expansion of CMAS-resistant layer 20 is similar to the coefficient of thermal expansion (CTE) of first barrier coating layer 18 and/or second barrier coating layer 22. Thus, the coefficient of thermal expansion of the constituents of CMAS-resistant layer 20 may be an important consideration when designing CMAS-resistant layer 20. Table 1 shows some exemplary rare earth silicates (e.g., a rare earth oxide mixed with silica (SiO₂)) and their corresponding CTEs.

**Table 1: Coefficients of Thermal Expansion for Various Rare Earth Silicates**

| **Rare Earth Silicate** | **Nd₂SiO₅** | **Gd₂SiO₅** | **Dy₂SiO₅** | **Yb₂SiO₅** | **Lu₂SiO₅** | **Yb₂Si₂O₇** |
|---|---|---|---|---|---|---|
| **CTE (10⁻⁶/°C)** | 9.9 | 10.1 | 8.5 | 8 | 7.9 | 5.2 |

The exemplary rare earth silicates shown in Table 1 have CTEs that differ by as much as a factor of two (e.g., Gd₂SiO₅ (Gd₂O₃ + SiO₂) and Yb₂Si₂O₇ (Yb₂O₃ + 2SiO₂)). This permits a relatively wide range of tailoring of the CTE of CMAS-resistant layer 20. For example, a first barrier coating layer 18 including yttria-stabilized zirconia has a coefficient of thermal expansion of about 10 x 10⁻⁶/°C. Thus, either neodymium silicate (Nd₂SiO₅)-based or gadolinium silicate (Gd₂SiO₅)-based compositions may be particularly desirable for including in a CMAS-resistant layer 20 formed on yttria-stabilized zirconia, along with any desired additive components.

CMAS-resistant layer 20 is deposited on first barrier coating layer 18 by any suitable coating fabrication technique, including, for example, plasma spraying, PVD, CVD, or a slurry process. In some embodiments, CMAS-resistant layer 20 is deposited on first barrier coating layer 18 using DVD.

As illustrated in FIG. 1, article 10 further includes second barrier coating layer 22, which is formed on CMAS-resistant layer 20. In some embodiments, second barrier coating layer 22 has substantially the same composition as first barrier coating layer 22, while in other embodiments, second barrier coating layer 22 has a different composition than first barrier coating layer 22.

Similar to first barrier coating layer 18, second barrier coating layer 22 may be a TBC or an EBC. A TBC may primarily provide thermal insulation to substrate 12, while an EBC may provide protection from environmental species, as an alternative or in addition to providing thermal insulation to substrate 12.

When second barrier coating layer 22 is a TBC, layer 22 includes a thermally insulative material. For example, second barrier coating layer 22 may include zirconia and/or hafnia. Optionally, second barrier coating layer 22 includes one or more additive elements or compounds which modify the properties of the zirconia and/or hafnia, such as phase stability, thermal conductivity. In some embodiments, second barrier coating layer 22 includes as an additive at least one oxide of a rare earth element (Lu, Yb, Tm, Er, Ho, Dy, Tb, Gd, Eu, Sm, Pm, Nd, Pr, Ce, La, Y, or Sc).

In some embodiments, second barrier coating layer 22 may be essentially free of yttria. As described above, CMAS may dissolve yttria-stabilizcd zirconia along grain boundaries, and the zirconia which precipitates out of the solution may include lower yttria content than the yttria-stabilized zirconia prior to dissolution. This may be detrimental to performance of an yttria-stabilized zirconia barrier coating. Thus, particularly because second barrier coating layer 22 is exposed to the surrounding environment (i.e., does not have a CMAS-resistant layer formed thereon), second barrier coating layer 22 may be essentially free of yttria to reduce or eliminate the dissolution of layer 22 by CMAS.

In some embodiments, second barrier coating layer 22 may thus include zirconia and/or hafnia stabilized by at least one rare earth oxide other than yttria. For example, second barrier coating layer 22 may include zirconia and/or hafnia stabilized with a primary dopant, a first co-dopant, and a second co-dopant. The primary dopant is preferably present in a greater amount than either the first or second co-dopants, and may be present in an amount less than, equal to, or greater than the total amount of the first and second co-dopants. The primary dopant includes ytterbia, the first co-dopant includes samaria, and the second co-dopant includes at least one of lutetia, scandia, ceria, gadolinia, neodymia, or europia. In some embodiments, second barrier coating layer 22 includes these components in amounts similar to those described above with respect to first barrier coating layer 18.

The composition of second barrier coating layer 22 may provide a desired phase constitution. For a second barrier coating layer 22 including zirconia and/or hafnia, a primary dopant, a first co-dopant, and a second co-dopant, accessible phase constitutions include metastable tetragonal-prime, cubic, and compound (RE₂Zr₂O₇ and RE₂Hf₂O₇, where RE is a rare earth element). As described above with respect to first barrier coating layer 18, different compositions may lead to different phase constitutions. In some embodiments, second barrier coating layer 22 may include one of the compositions described above with respect to first barrier coating layer 18, which achieves one of the metastable tetragonal-prime, cubic, or compound phase constitutions.

A second barrier coating layer 22 including a TBC may be formed as a porous layer or a columnar layer.

In some embodiments, second barrier coating layer 22 includes an EBC. A second barrier coating layer 22 including an EBC is formed of a layer which prevents environmental attack of the substrate 12. For example, the EBC may include a material that is resistant to oxidation or water vapor attack. Exemplary EBC materials include mullite; glass ceramics such as barium strontium aluminosilicate, calcium aluminosilicate, cordierite, and lithium aluminosilicate; and rare earth silicates. The rare earth silicate may be a rare earth mono-silicate or a rare earth di-silicate. In some embodiments, a second barrier coating layer 22 that includes an EBC is deposited as a substantially non-porous layer, while in other embodiments, a second barrier coating layer 22 that includes an EBC is deposited as a layer including a plurality of cracks.

Regardless of the composition of second barrier coating layer 22, layer 22 may be deposited by any suitable coating fabrication technique, including, for example, plasma spraying, PVD, DVD, CVD, or a slurry process.

In embodiments in which second barrier coating layer 22 does not include a TBC containing yttria, second barrier coating layer 22 may provide to first barrier coating layer 18 and substrate 12 protection from CMAS, in addition to CMAS-resistant layer 20. For example, second barrier coating layer 22 may reduce a rate at which CMAS and CMAS-resistant layer 20 react by reducing the rate at which CMAS comes into contact with CMAS-resistant layer 20, as described above. Accordingly, the combination of the presence of second barrier coating layer 22 and the formation of a solid or highly viscous reaction product from the reaction of CMAS-resistant layer 20 and CMAS may substantially prevent infiltration of molten CMAS in pores or cracks of first barrier coating layer 18.

As described above, in some embodiments, the construction of coating 14, which includes first barrier coating layer 18, CMAS-resistant layer 20, and second barrier coating layer 20, provides greater thermal protection (i.e., have a lower effective thermal conductivity) to substrate 12 than a single-layer coating of a similar thickness. The interfaces between first barrier coating layer 18 and CMAS-resistant layer 20 and between CMAS-resistant layer 20 and second barrier coating layer 22 provide scattering points for phonons. The scattering of phonons reduces an effective thermal conductivity of coating 14 as a whole, compared to a single-layer coating of a similar thickness.

In some embodiments, as illustrated in FIG. 2, an article 30 may include a coating 32 including a bond coat 16, a first barrier coating layer 18, a first CMAS-resistant layer 34, a second barrier coating layer 22, and a second CMAS-resistant layer 36. Similar to article 10 described above with respect to FIG. 1, article 30 may or may not include bond coat 16.

Bond coat 16, first barrier coating layer 18, and second barrier coating layer 22 may be similar to the analogous structures described above with respect to FIG. 1. Each of bond coat 16, first barrier coating layer 18, and second barrier coating layer 22 may include any combination of compositions and thicknesses described above with respect to similar layers in FIG. 1. For example, first barrier coating layer 18 and second barrier coating layer 22 may each include either a TBC composition or an EBC composition. The compositions of first barrier coating layer 18 and second barrier coating layer 22 may be independently selected. In some embodiments, first barrier coating layer 18 has the same composition as second barrier coating layer 22, while in other embodiments, first barrier coating layer 18 has a different composition than second barrier coating layer 22.

First CMAS-resistant layer 34 and second CMAS-resistant layer 36 each include a composition similar to those described above with respect to CMAS-resistant layer 20. For example, at least one of first CMAS-resistant layer 34 and second CMAS-resistant layer 36 may include an element or compound that reacts with CMAS to form a solid or highly-viscous reaction product (i.e., a reaction product that is a solid or highly viscous at the temperatures experienced by article 30). In the invention the first CMAS-resistant layer 34 and the second CMAS-resistant layer 36 include alumina and at least one rare earth oxide. In some embodiments, the at least one of first CMAS-resistant layer 34 and/or second CMAS-resistant layer 36 essentially free of zirconia and hafnia. That is, in these embodiments, the at least one of first CMAS-resistant layer 34 and/or second CMAS-resistant layer 36 includes at most trace amounts of zirconia and hafnia, such as, for example, the amounts present in commercially-available rare earth oxides.

In some embodiments, the at least one of first CMAS-resistant layer 34 and second CMAS-resistant layer 36 further includes silica. Silica may affect one or more properties of the at least one of first CMAS-resistant layer 34 and/or second CMAS-resistant layer 36, such as, for example, chemical reactivity with CMAS, viscosity of the reaction products, the coefficient of thermal expansion, the chemical compatibility of the at least one of first CMAS-resistant layer 34 and/or second CMAS-resistant layer 36 with first barrier coating layer 18 and/or second barrier coating layer 22.

Additionally, in some embodiments, the at least one of first CMAS-resistant layer 34 and/or second CMAS-resistant layer 36 optionally includes other additive components, such as, for example, TiO₂, Ta₂O₅, HfSiO₄, alkali oxides, alkali earth oxides, or mixtures thereof. The additive components may be added to the at least one of first CMAS-resistant layer 34 and/or second CMAS-resistant layer 36 to modify one or more desired properties of the layer 34 and/or 36.

The at least one of first CMAS-resistant layer 34 and/or second CMAS-resistant layer 36 may include up to about 99 mol. % of the at least one rare earth oxide, ± 1 mol. %, and up to about 90 mol. % of alumina, with a total of 100 mol. %. In some embodiments, the at least one of first CMAS-resistant layer 34 and/or second CMAS-resistant layer 36 may also include up to about 90 mol. % silica, with a total of 100 mol.%. In some embodiments, the at least one of first CMAS-resistant layer 34 and/or second CMAS-resistant layer 36 may additionally include up to about 50 mol. % of at least one of TiO₂, Ta₂O₅, HfSiO₄, an alkali oxide, or an alkali earth oxide.

In some embodiments, the at least one of first CMAS-resistant layer 34 and/or second CMAS-resistant layer 36 includes between about 20 mol. % and about 80 mol. % of at least one rare earth oxide, between about 10 mol. % and about 80 mol. % alumina, and, optionally, between about 1 mol. % to about 80 mol. % of silica. In some embodiments, the at least one of first CMAS-resistant layer 34 and/or second CMAS-resistant layer 36 may additionally include between about 0.1 mol. % and about 30 mol. % of at least one of TiO₂, Ta₂O₅, HfSiO₄, an alkali oxide, or an alkali earth oxide.

In some embodiments, a coating 32 that includes second CMAS-resistant layer 36 provides additional resistance to CMAS compared to coating 14 shown in FIG. 1, which does not include second CMAS-resistant layer 36. For example, second CMAS-resistant layer 36 provides initial protection from CMAS. Second CMAS-resistant layer 36 may react with CMAS present on the outer surface 38 of layer 36 to form a reaction layer 40. Reaction layer 40 may include a solid or highly-viscous material, which will lower the reaction rate of the CMAS with second CMAS-resistant layer 36. That is, once a solid or highly viscous reaction layer 40 forms on the surface of second CMAS-resistant layer 36, the reaction between second CMAS-resistant layer 36 and CMAS will slow, because any further reaction will require the diffusion of CMAS through reaction layer 40 to encounter second CMAS-resistant layer 36, or diffusion of a component of second CMAS-resistant layer 36 through reaction layer 40 to encounter the CMAS. In either case, the diffusion of either CMAS or the component of second CMAS-resistant layer 36 is expected to be the limiting step in the reaction once a solid or highly-viscous reaction layer 40 is formed on the surface of second CMAS-resistant layer 36.

Even if a reaction layer 40 does not form on the surface of second CMAS-resistant layer 36 and/or sufficient time passes to allow sufficient CMAS to react with second CMAS-resistant layer 36 such that second CMAS-resistant layer 36 is consumed, first CMAS-resistant layer 34 (and, in some embodiments, second barrier coating 22) may provide protection from CMAS to first barrier coating 18, as described above with respect to FIG. 1. In this way, second CMAS-resistant layer 36, first CMAS-resistant layer 34, and, optionally, second barrier coating 22 may provide redundant protection from CMAS to first barrier coating layer 18 and substrate 12.

Additionally, in some embodiments, coating 32 may provide greater thermal protection to substrate 12 than a thermal barrier coating of equivalent thickness which includes only a single layer. As described above, this may be because the interfaces between the respective layers provide scattering sites for phonons which transmit the thermal energy through coating 32.

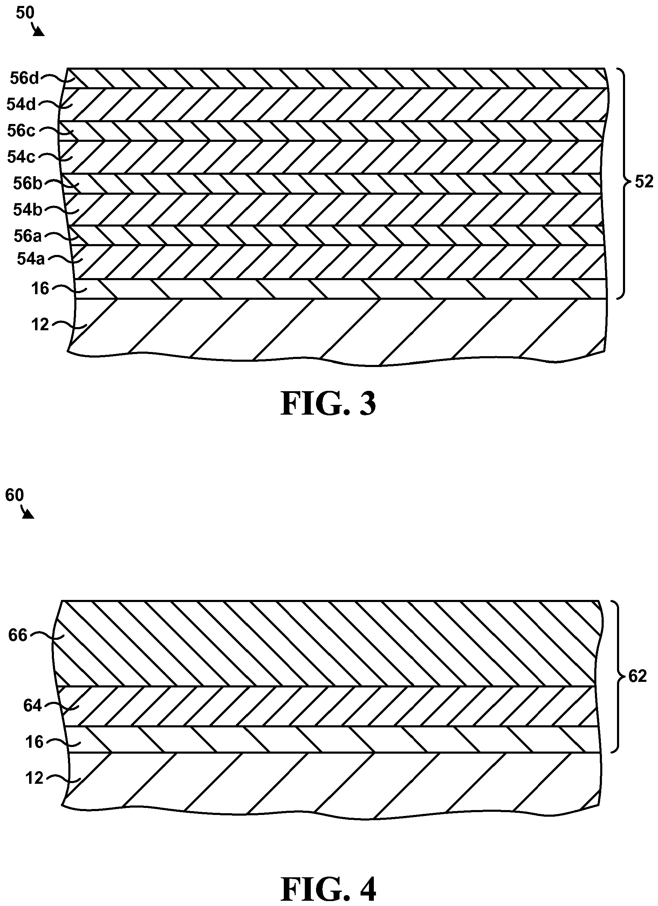

In some embodiments, the concept of alternative barrier coating layers and CMAS-resistant layers may be expanded beyond two barrier coating layers and two CMAS-resistant layers. For example, as illustrated in FIG. 3, an article 50 may include a coating 52 including four barrier coating layers 54a, 54b, 54c, 54c (collectively "barrier coating layers 54") and four CMAS-resistant layers 56a, 56b, 56c, 56d collectively "barrier coating layers 56"). While FIG. 3 illustrates an article including four barrier coating layers 54 and four CMAS-resistant layers 56, an article may include any number of barrier coating layers 54 and any number of CMAS-resistant layers 56. In some embodiments, an article includes an equal number of barrier coating layers 54 and CMAS-resistant layer 56, while in other embodiments, an article may include a different number of barrier coating layers 54 than CMAS-resistant layers 56. In embodiments in which an article includes a different number of barrier coating layers 54 than CMAS-resistant layers 56, the article may include either a greater number of barrier coating layers 54 or a lesser number of barrier coating layers 54.

Each of barrier coating layers 54 may include an independently selected composition, and may include a TBC composition or an EBC composition, as described herein. For example, at least one of the barrier coating layers 54 may include a TBC composition and at least one other of the barrier coating layers 54 may include an EBC composition. In embodiments in which two or more of the barrier coating layers 54 include a TBC composition, the TBC composition of the individual barrier coating layers 54 may be the same or may be different. Similarly, in embodiments in which two or more of the barrier coating layers 54 include an EBC composition, the EBC composition of the individual barrier coating layers 54 may be the same or may be different. The composition of the individual barrier coating layers 54 may include any of the compositions described above with respect to FIGS. 1 and 2.

Additionally, each of CMAS-resistant layers 56 may include an independently selected composition. In some embodiments, at least two of the CMAS-resistant layers 56 may have the same composition. The composition of the individual CMAS-resistant layers 56 may include any of the compositions described above with respect to FIGS. 1 and 2.

In some embodiments, an upper layer of coating 52 is a CMAS-resistant layer 56d, as illustrated in FIG. 3. However, in other embodiments, an upper layer of coating 52 may be a barrier coating layer 54.

In some embodiments, a coating 52 including a plurality CMAS-resistant layers 56 alternating with a plurality of barrier coating layers 54 may provide advantages. For example, coating 52 may provide greater thermal protection (e.g., have a lower effective thermal conductivity) than a coating including a single layer of similar thickness as coating 52. As described above, while not wishing to be bound by theory, the interfaces between dissimilar layers (e.g., between barrier coating layer 54a and CMAS-resistant layer 56a) provide phonon scattering points, which may reduce thermal conductivity of coating 52 compared to a coating without interfaces between dissimilar layers. In some embodiments, a greater number of alternating layers may provide a greater reduction in thermal conductivity of coating 52. Additionally or alternatively, coating 52 may provide improved CMAS-resistance to substrate 12 compared to a coating including a single CMAS-resistant layer, as the multiple CMAS-resistant layers 56 may provide redundant protection against CMAS infiltration into pores or cracks of barrier coating layers 54.

In some examples, an article may be coated with a coating that includes an inner CMAS-resistant layer, i.e., a CMAS-resistant layer that is formed under another coating layer. An example of such a coating is shown in FIG. 4. In FIG. 4, an article 60 may include a substrate 12 coated with a coating 62. The coating 62 may include bond coat 16, an inner CMAS-resistant layer 64 formed on bond coat 16, and a barrier coating layer 66 formed on CMAS-resistant layer 64.

Inner CMAS-resistant layer 64 is formed under barrier coating layer 66 and may not provide protection from CMAS to barrier coating layer 66. However, inner CMAS-resistant layer 64 may provide protection from CMAS to bond coat 16 and/or substrate 12. Components of CMAS may react with components of bond coat 16 and/or substrate 12 if CMAS contacts bond coat 16, which may damage bond coat 16 and/or substrate 12, and may cause detrimental effects to the integrity of article 60. For example, reaction between CMAS and bond coat 16 may weaken a bond between bond coat 16 and substrate 12 and/or between bond coat 16 and an overlying layer. In some cases, bond coat 16 may be weakened to an extent that an overlying coating or coatings formed on bond coat 16 may delaminate from bond coat 16. This may leave bond coat 16 and/or substrate 12 to be left substantially unprotected, e.g., thermally or from environmental chemical species. Similarly, in examples in which article 60 does not include bond coat 16, inner CMAS-resistant layer 64 may provide protection from CMAS to substrate 12.

Substrate 12 may be formed of similar materials to those described elsewhere herein. For example, substrate 12 may include a superalloy, a ceramic, or a CMC. Bond coat 16 may include any useful material that improves adhesion between substrate 12 and an overlying layer, such as inner CMAS-resistant layer 64. For example, when substrate 12 is a superalloy, bond coat 16 may include an alloy, such as an MCrAlY alloy, a β-NiAl nickel aluminide alloy, a γ-Ni + γ'-Ni₃Al nickel aluminide alloy. In embodiments where substrate 12 is a ceramic or CMC, bond coat 16 may include a ceramic or another material that is compatible with the substrate 12, such as, for example, mullite, silicon, silica, a silicide, or the like.

Although FIG. 4 illustrates article 60 as including bond coat 16, in other examples, article 60 may not include bond coat 16, and inner CMAS-resistant layer 64 may be formed directly on substrate 12 or on another layer, such as a barrier coating layer, which is formed on substrate 12.

Inner CMAS-resistant layer 64 is formed on bond coat 16 (or on substrate 12 or another layer) and may include alumina and at least one rare earth oxide, as described above with respect to CMAS-resistant layer 20 of FIG. 1. In some examples, inner CMAS-resistant layer 64 additionally may include silica. In some examples, inner CMAS-resistant layer 64 may further include at least one of TiO₂, Ta₂O₅, HfSiO₄, alkali oxides, or alkali earth oxides. Inner CMAS-resistant layer 64 may include any of the compositions described above with respect to FIGS. 1-3, and may have a thickness within the ranges described herein.

Barrier coating layer 66 is formed on inner CMAS-resistant layer 64 and may include a TBC composition or an EBC composition, similar to first barrier coating layer 18 and second barrier coating layer 22 of FIG. 1. Barrier coating layer 66 may include any of the compositions described with respect to FIGS. 1-3, and may include a thickness in the ranges described with respect to FIGS. 1-3.

In some examples, barrier coating layer 66 may include a composition that itself provides some protection from CMAS to bond coat 16 and/or substrate 12. For example, as described above with respect to second barrier coating layer 22 of FIG. 1, barrier coating layer 64 may include a composition that is essentially free of yttria. This may reduce reactivity of barrier coating layer 66 with CMAS. Similar to second barrier coating layer 22 of FIG. 1, barrier coating layer 66 may function as a layer through which CMAS must pass before coming into contact with CMAS-resistant layer 20. In this way, barrier coating layer 66 may in some examples contribute to protecting bond coat 16 and/or substrate 12 from CMAS.

### EXAMPLES

### Comparative Example 1

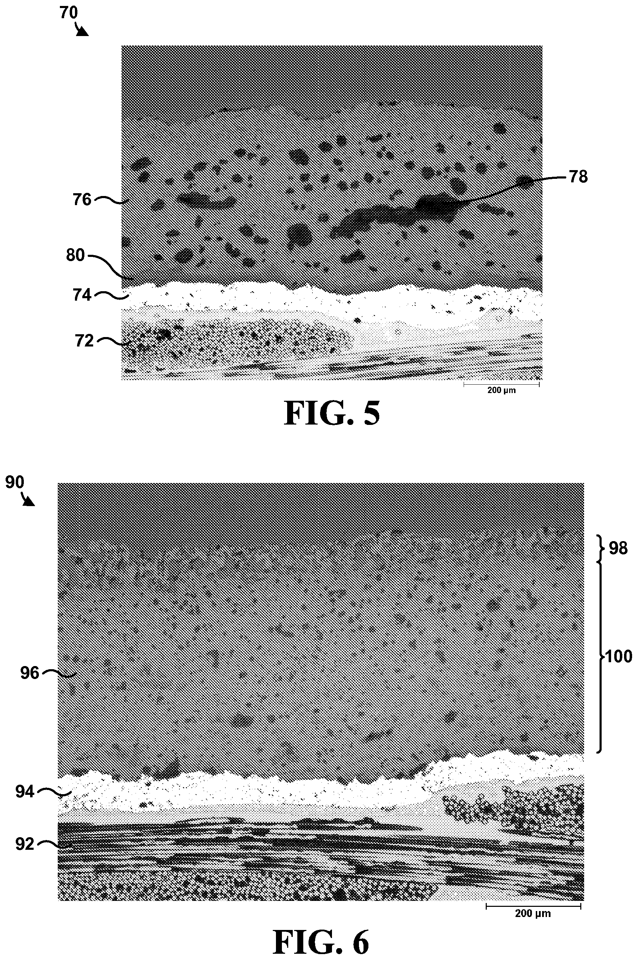

FIG. 5 shows a cross-sectional photograph of an example of article 70 including a SiC/SiC CMC substrate 72 coated with a silicon bond coat 74 and an ytterbium disilicate (Yb₂Si₂O₇ or Yb₂O₃-2SiO₂) layer 76. Article 70 initially was exposed to 12 mg/cm² CMAS at a temperature of 1300°C for 3 hours. Article 70 was then subjected to a 100 hour thermal cycling test with 1 hour heating cycles at about 1316 °C and 90% water vapor (high steam) prior to the photograph. The CMAS has infiltrated the ytterbium silicate layer 72 and has reacted with the ytterbium silicate to form large voids 78 within the ytterbium silicate layer 76. Additionally, the ytterbium silicate layer 76 has begun to delaminate from the silicon bond coat 74 due to penetration of CMAS to the interface and reaction of the CMAS with the silicon bond coat 74 (e.g., at the location indicated by reference numeral 80).

### Reference Example 1

FIG. 6 shows a cross-sectional photograph of an example of an article 90 including a SiC/SiC CMC substrate 92 coated with a silicon bond coat 94 and a CMAS-resistant layer 96. CMAS-resistant layer 96 includes ytterbium oxide (Yb₂O₃), alumina (Al₂O₃), and silica (SiO₂). Article 90 initially was exposed to 12 mg/cm² CMAS at a temperature of 1300°C for 3 hours. Article 90 was then subjected to a 100 hour thermal cycling test with 1 hour heating cycles at 1316 °C and about 90% water vapor (high steam) prior to the photograph. After conclusion of the thermal cycles, CMAS-resistant layer 96 shows an upper portion 98 that is highly porous due to reaction with CMAS. CMAS-resistant layer 96 also includes a lower portion 100 which was not affected by CMAS. Additionally, substantially no delamination of CMAS-resistant layer 96 from silicon bond coat 94 has occurred.

### Reference Example 2

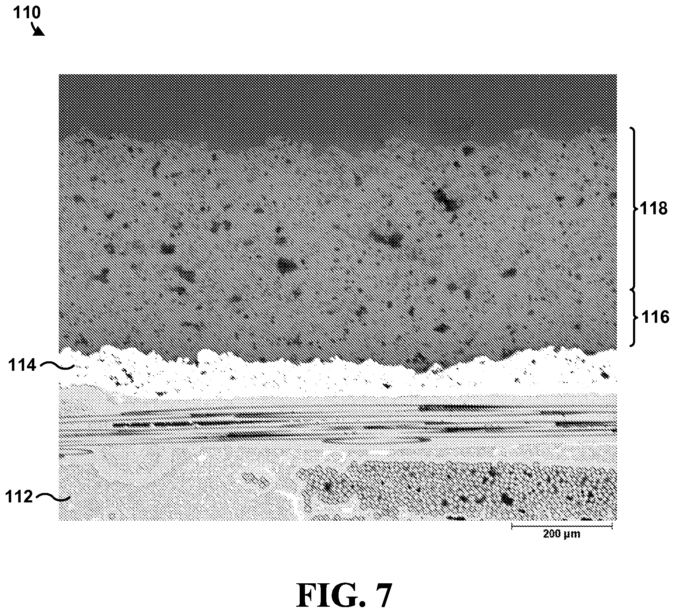

FIG. 7 shows a cross-sectional photograph of an example of an article 110 that includes a CMC substrate 112 coated with a bond coat 114, an inner CMAS-resistant layer 116, and a barrier coating layer 118 that included ytterbium disilicate (Yb₂Si₂O₇ or Yb₂O₃-2SiO₂). CMC substrate 112 included an SiC matrix and SiC reinforcement material. Bond coat 114 included silicon. The inner CMAS-resistant layer 116 included 85 weight percent (wt. %) ytterbium oxide (Yb₂O₃), 10 wt. % silica (SiO₂), and 5 wt. % alumina (Al₂O₃). Article 100 was then subjected to a 100 hour thermal cycling test with 1 hour heating cycles at 1316 °C and about 90% water vapor (high steam) prior to the photograph. FIG. 7 shows that inner CMAS-resistant layer 116 maintained excellent adherence with bond coat 114 while barrier coating layer 118 provided protection from water vapor during the thermal cycling test.

## Claims

1. An article (30) comprising:
a substrate (12);
a first calcia-magnesia-alumina-silicate-resistant (CMAS-resistant) layer (34) comprising a mixture of a rare earth oxide, alumina and silica, wherein the CMAS-resistant layer (34) is formed over the substrate (12);
a barrier coating layer (22) comprising a thermal barrier coating composition or an environmental barrier coating composition, wherein the barrier coating layer (22) is formed on the first CMAS-resistant layer (34); and
a second CMAS-resistant layer (36) comprising a mixture of a second rare earth oxide and alumina formed on the barrier coating layer (22).

2. The article (30) of claim 1, wherein at least one of the first CMAS-resistant layer (34) or the second CMAS-resistant layer (36) further comprises at least one of Ta₂O₅, TiO₂, HfSiO₄, an akali oxide, or an alkali earth oxide.

3. The article (30) of claim 1, wherein the barrier coating layer (22) comprises the thermal barrier coating composition, and wherein the thermal barrier coating composition comprises at least one of zirconia or hafnia; ytterbia; samaria; and at least one of lutetia, scandia, ceria, gadolinia, neodymia, or europia.

4. The article (30) of claim 3, wherein the thermal barrier coating composition is essentially free of yttria.

5. The article (30) of claim 1, wherein the barrier coating layer (22) comprises an environmental barrier coating composition, and wherein the environmental barrier coating comprises at least one of a rare earth monosilicate, a rare earth disilicate, barium aluminum silicate, barium strontium aluminum silicate, or strontium aluminum silicate.

6. The article (30) of claim 1, wherein the barrier coating layer (22) comprises a second barrier coating layer (22), wherein the article (30) further comprises a first barrier coating layer (18) formed over the substrate (12), wherein the first barrier coating layer (18) comprises a thermal barrier coating composition or an environmental barrier coating composition, and wherein the first CMAS-resistant layer (34) is formed on the first barrier coating layer (18).

7. The article (30) of claim 6, wherein the first barrier coating layer (18) comprises the thermal barrier coating composition, and wherein the thermal barrier coating composition comprises at least one of zirconia or hafnia; ytterbia; samaria; and at least one of lutetia, scandia, ceria, gadolinia, neodymia, or europia.

8. The article (30) of claim 7, wherein the second CMAS-resistant layer (36) comprises up to 99 mol. % of the second rare earth oxide and up to 90 mol. % of the alumina, with a total of 100 mol. %.

9. The article (30) of claim 7, wherein the second CMAS-resistant layer (36) comprises up to 99 mol. % of the second rare earth oxide, up to 90 mol. % of the alumina, and up to 90 mol. % silica, with a total of 100 mol. %

10. The article (30) of claim 9, wherein the first CMAS-resistant layer (34) further comprises up to 50 mol. % of at least one of Ta₂O₅, TiO₂, HfSiO₄, an akali oxide, or an alkali earth oxide.

11. The article (30) of claim 1, further comprising a bond coat (16) formed on the substrate (12), wherein the first CMAS-resistant layer (34) is formed on the bond coat (16).

12. A method comprising:
forming, over a substrate (12), a first calcia-magnesia-alumina-silicate-resistant (CMAS-resistant) layer (34) comprising a rare earth oxide, alumina and silica;
forming, on the first CMAS-resistant layer (34), a barrier coating layer (22) comprising a thermal barrier coating composition or an environmental barrier coating composition; and
forming, on the barrier coating layer (22), a second CMAS-resistant layer (36) comprising a second rare earth oxide and alumina.

13. The method of claim 12, wherein forming, on the first CMAS-resistant layer (34), the barrier coating layer (22) comprises forming, on the first CMAS-resistant layer (34), a second barrier coating layer (22), wherein the method further comprises forming, over the substrate (12), a first barrier coating layer (18) comprising a thermal barrier coating composition or an environmental barrier coating composition, and wherein forming, over the substrate (12), the first CMAS-resistant layer (34) comprises forming, on the first barrier coating layer (18), the first CMAS-resistant layer (34).

14. The method of claim 12, further comprising:
forming, on the substrate (12), a bond coat (16), wherein forming, over the substrate (12), the first CMAS-resistant layer (34) comprises forming, over the bond coat (16), the first CMAS-resistant layer (34).

## Patentansprüche

1. Artikel (30), umfassend:
ein Substrat (12);
eine erste Calciumoxid-Magnesiumoxid-Aluminiumoxid-Silikat-resistente (CMAS-resistente) Schicht (34), die ein Gemisch aus Seltenerdoxid, Aluminiumoxid und Siliziumoxid umfasst, wobei die CMAS-resistente Schicht (34) über dem Substrat (12) ausgebildet ist;
eine Sperrüberzugsschicht (22), die eine Wärmesperrenüberzugszusammensetzung oder eine Umweltsperrenüberzugszusammensetzung umfasst, wobei die Sperrüberzugsschicht (22) auf der ersten CMAS-resistenten Schicht (34) ausgebildet ist; und
eine zweite CMAS-resistente Schicht (36), die ein Gemisch aus einem zweiten Seltenerdoxid und Aluminiumoxid umfasst, die auf der Sperrüberzugsschicht (22) ausgebildet ist.

2. Artikel (30) nach Anspruch 1, wobei mindestens eine Schicht der ersten CMAS-resistenten Schicht (34) und der zweiten CMAS-resistenten Schicht (36) ferner mindestens eines der folgenden umfasst: Ta₂O₅, TiO₂, HfSiO₄, ein Alkalioxid oder ein Erdalkalioxid.

3. Artikel (30) nach Anspruch 1, wobei die Sperrüberzugsschicht (22) die Wärmesperrenüberzugszusammensetzung umfasst, und wobei die Wärmesperrenüberzugszusammensetzung mindestens eines der folgenden umfasst:
Zirkonoxid oder Hafniumoxid; Ytterbiumoxid; Samariumoxid; und mindestens eines der folgenden: Lutetiumoxid, Scandiumoxid, Ceroxid, Gadoliniumoxid, Neodymoxid oder Europiumoxid.

4. Artikel (30) nach Anspruch 3, wobei die Wärmesperrenüberzugszusammensetzung im Wesentlichen frei von Ytterbiumoxid ist.

5. Artikel (30) nach Anspruch 1, wobei die Sperrüberzugsschicht (22) eine Umweltsperrenüberzugszusammensetzung umfasst, und wobei der Umweltsperrenüberzug mindestens eines der folgenden umfasst: ein Seltenerd-Monosilikat, ein Seltenerd-Disilikat, Bariumaluminiumsilikat, Bariumstrontiumaluminiumsilikat oder Strontiumaluminiumsilikat.

6. Artikel (30) nach Anspruch 1, wobei die Sperrüberzugsschicht (22) eine zweite Sperrüberzugsschicht (22) umfasst, wobei der Artikel (30) ferner eine erste Sperrüberzugsschicht (18) umfasst, die über dem Substrat (12) ausgebildet ist, wobei die erste Sperrüberzugsschicht (18) eine Wärmesperrenüberzugszusammensetzung oder eine Umweltsperrenüberzugszusammensetzung umfasst, und wobei die CMAS-resistente Schicht (34) auf der ersten Sperrüberzugsschicht (18) ausgebildet ist.

7. Artikel (30) nach Anspruch 6, wobei die erste Sperrüberzugsschicht (18) die Wärmesperrenüberzugszusammensetzung umfasst, und wobei die Wärmesperrenüberzugszusammensetzung mindestens eines der folgenden umfasst: Zirkonoxid oder Hafniumoxid; Ytterbiumoxid; Samariumoxid; und mindestens eines der folgenden: Lutetiumoxid, Scandiumoxid, Ceroxid, Gadoliniumoxid, Neodymoxid oder Europiumoxid.

8. Artikel (30) nach Anspruch 7, wobei die zweite CMAS-resistente Schicht (36) bis zu 99 Mol-% des zweiten Seltenerdoxids und bis zu 90 Mol-% des Aluminiumoxids umfasst, bei insgesamt 100 Mol-%.

9. Artikel (30) nach Anspruch 7, wobei die zweite CMAS-resistente Schicht (36) bis zu 99 Mol-% des zweiten Seltenerdoxids, bis zu 90 Mol-% des Aluminiumoxids und bis zu 90 Mol-% des Siliziumoxids umfasst, bei insgesamt 100 Mol-%.

10. Artikel (30) nach Anspruch 9, wobei die erste CMAS-resistente Schicht (34) ferner bis zu 50 Mol-% mindestens eines der folgenden umfasst: Ta₂O₅, TiO₂, HfSiO₄, eines Alkalioxids oder eines Erdalkalioxids.

11. Artikel (30) nach Anspruch 1, der ferner eine Haftvermittlungsschicht (16) umfasst, die auf dem Substrat (12) ausgebildet ist, wobei die erste CMAS-resistente Schicht (34) auf der Haftvermittlungsschicht (16) ausgebildet ist.

12. Verfahren, umfassend:
über einem Substrat (12), Ausbilden einer ersten Calciumoxid-Magnesiumoxid-Aluminiumoxid-Silikat-resistenten (CMAS-resistenten) Schicht (34), die ein Seltenerdoxid, Aluminiumoxid und Siliziumoxid umfasst;
auf der ersten CMAS-resistenten Schicht (34), Ausbilden einer Sperrüberzugsschicht (22), die eine Wärmesperrenüberzugszusammensetzung oder eine Umweltsperrenüberzugszusammensetzung umfasst; und
auf der Sperrüberzugsschicht (22), Ausbilden einer zweiten CMAS-resistenten Schicht (36), die ein zweites Seltenerdoxid und Aluminiumoxid umfasst.

13. Verfahren nach Anspruch 12, wobei das Ausbilden der Sperrüberzugsschicht (22) auf der ersten CMAS-resistenten Schicht (34) das Ausbilden einer zweiten Sperrüberzugsschicht (22) auf der ersten CMAS-resistenten Schicht (34) umfasst, wobei das Verfahren ferner folgendes umfasst: das Ausbilden einer ersten Sperrüberzugsschicht (18) über dem Substrat (12), wobei diese Schicht eine Wärmesperrenüberzugszusammensetzung oder eine Umweltsperrenüberzugszusammensetzung umfasst, und wobei das Ausbilden der ersten CMAS-resistenten Schicht (34) über dem Substrat (12) das Ausbilden der ersten CMAS-resistenten Schicht (34) auf der ersten Sperrüberzugsschicht (18) umfasst.

14. Verfahren nach Anspruch 12, ferner umfassend:
Ausbilden einer Haftvermittlungsschicht (16) auf dem Substrat (12), wobei das Ausbilden der ersten CMAS-resistenten Schicht (34) über dem Substrat (12) das Ausbilden der ersten CMAS-resistenten Schicht (34) über der Haftvermittlungsschicht (16) umfasst.

## Revendications

1. Article (30) comprenant :
un substrat (12) ;
une première couche résistante à l'oxyde de calcium-magnésie-alumine-silicate (résistante au CMAS) (34) comprenant un mélange d'un oxyde de terres rares, d'alumine et de silice, la couche résistante au CMAS (34) étant formée au-dessus du substrat (12) ;
une couche de revêtement de barrière (22) comprenant une composition de revêtement de barrière thermique ou une composition de revêtement de barrière environnementale, la couche de revêtement de barrière (22) étant formée sur la première couche résistante au CMAS (34) ; et
une deuxième couche résistante au CMAS (36) comprenant un mélange d'un deuxième oxyde de terres rares et d'alumine formée sur la couche de revêtement de barrière (22).

2. Article (30) selon la revendication 1, au moins une couche parmi la première couche résistante au CMAS (34) ou la deuxième couche résistante au CMAS (36) comprenant en outre au moins un élément parmi Ta₂O₅, TiO₂, HfSiO₄, un oxyde alcalin ou un oxyde alcalino-terreux.

3. Article (30) selon la revendication 1, la couche de revêtement de barrière (22) comprenant la composition de revêtement de barrière thermique, et la composition de revêtement de barrière thermique comprenant au moins un élément parmi la zircone ou l'oxyde de hafnium ; l'oxyde d'ytterbium ; l'oxyde de samarium ; et au moins un élément parmi l'oxyde de lutétium, l'oxyde de scandium, l'oxyde de cérium, l'oxyde de gadolinium, l'oxyde de néodyme ou l'oxyde d'europium.

4. Article (30) selon la revendication 3, la composition de revêtement de barrière thermique étant essentiellement exempte d'oxyde d'yttrium.

5. Article (30) selon la revendication 1, la couche de revêtement de barrière (22) comprenant une composition de revêtement de barrière environnementale, et le revêtement de barrière environnementale comprenant au moins un élément parmi un monosilicate de terres rares, un disilicate de terres rares, le silicate de baryum et d'aluminium, le silicate de baryum, de strontium et d'aluminium, ou le silicate de strontium et d'aluminium.

6. Article (30) selon la revendication 1, la couche de revêtement de barrière (22) comprenant une deuxième couche de revêtement de barrière (22), l'article (30) comprenant en outre une première couche de revêtement de barrière (18) formée au-dessus du substrat (12), la première couche de revêtement de barrière (18) comprenant une composition de revêtement de barrière thermique ou une composition de revêtement de barrière environnementale, et la première couche résistante au CMAS (34) étant formée sur la première couche de revêtement de barrière (18).

7. Article (30) selon la revendication 6, la première couche de revêtement de barrière (18) comprenant la composition de revêtement de barrière thermique, et la composition de revêtement de barrière thermique comprenant au moins un élément parmi la zircone ou l'oxyde de hafnium ; l'oxyde d'ytterbium ; l'oxyde de samarium ; et au moins un élément parmi l'oxyde de lutétium, l'oxyde de scandium, l'oxyde de cérium, l'oxyde de gadolinium, l'oxyde de néodyme ou l'oxyde d'europium.

8. Article (30) selon la revendication 7, la deuxième couche résistante au CMAS (36) comprenant jusqu'à 99 % en moles du deuxième oxyde de terres rares et jusqu'à 90 % en moles de l'alumine, avec un total de 100 % en moles.

9. Article (30) selon la revendication 7, la deuxième couche résistante au CMAS (36) comprenant jusqu'à 99 % en moles du deuxième oxyde de terres rares, jusqu'à 90 % en moles de l'alumine, et jusqu'à 90 % en moles de silice, avec un total de 100 % en moles.

10. Article (30) selon la revendication 9, la première couche résistante au CMAS (34) comprenant en outre jusqu'à 50 % en moles d'au moins un élément parmi Ta₂O₅, TiO₂, HfSiO₄, un oxyde alcalin ou un oxyde alcalino-terreux.

11. Article (30) selon la revendication 1, comprenant en outre un revêtement de liaison (16) formé sur le substrat (12), la première couche résistante au CMAS (34) étant formée sur le revêtement de liaison (16).

12. Procédé comprenant :
la formation, au-dessus d'un substrat (12), d'une première couche résistante à l'oxyde de calcium-magnésie-alumine-silicate (résistante au CMAS) (34) comprenant un oxyde de terres rares, de l'alumine et de la silice ;
la formation, sur la première couche résistante au CMAS (34), d'une couche de revêtement de barrière (22) comprenant une composition de revêtement de barrière thermique ou une composition de revêtement de barrière environnementale ; et
la formation, sur la couche de revêtement de barrière (22), d'une deuxième couche résistante au CMAS (36) comprenant un deuxième oxyde de terres rares et de l'alumine.

13. Procédé selon la revendication 12, la formation, sur la première couche résistante au CMAS (34), de la couche de revêtement de barrière (22) comprenant la formation, sur la première couche résistante au CMAS (34), d'une deuxième couche de revêtement de barrière (22), le procédé comprenant en outre la formation, au-dessus du substrat (12), d'une première couche de revêtement de barrière (18) comprenant une composition de revêtement de barrière thermique ou une composition de revêtement de barrière environnementale, et la formation, au-dessus du substrat (12), de la première couche résistante au CMAS (34) comprenant la formation, sur la première couche de revêtement de barrière (18), de la première couche résistante au CMAS (34).

14. Procédé selon la revendication 12, comprenant en outre :
la formation, sur le substrat (12), d'un revêtement de liaison (16), la formation, au-dessus du substrat (12), de la première couche résistante au CMAS (34) comprenant la formation, au-dessus du revêtement de liaison (16), de la première couche résistante au CMAS (34).
